# Europäisches Patentamt

# European Patent Office

# Office européen des brevets

(19)

(11) Veröffentlichungsnummer: **0 011 136**
**A1**

(12) **EUROPÄISCHE PATENTANMELDUNG**

(21) Anmeldenummer: **79103922.5**

(22) Anmeldetag: **12.10.79**

(51) Int. Cl.³: **G 06 F 13/00**
**G 11 C 7/00**

(30) Priorität: **13.11.78 US 959824**

(43) Veröffentlichungstag der Anmeldung:
**28.05.80 Patentblatt 80/11**

(84) Benannte Vertragsstaaten:
**DE FR GB**

(71) Anmelder: **International Business Machines
Corporation**

**Armonk, N.Y. 10504(US)**

(72) Erfinder: **Gallagher, Joseph Gerard**
**R.D. 3, Box 123A**
**Owego, New York 13827(US)**

(72) Erfinder: **Plant, James Walter**
**1024 Holly Lane**
**Endwell, New York 13760(US)**

(74) Vertreter: **Rudolph, Wolfgang**
**Schönaicher Strasse 220**
**D-7030 Böblingen(DE)**

(54) **Schaltungsanordnung zum Integritätsschutz für einen Lese-/Schreib-Steuerspeicher.**

(57) Es wird eine Schaltungsanordnung zum Integritätsschutz für einen Lese-/Schreibsteuerspeicher beschrieben, der entweder mit einem Hauptspeicher integriert oder von ihm getrennt angeordnet ist, wobei jeder adressierbaren Steuerspeicherstelle ein Integritätsbit zugeordnet ist, das während der Initialisierungsphase für jede Steuerspeicherstelle, die zu schützen ist, auf "1" gesetzt wird und für jede nicht zu schützende Speicherstelle auf "0" oder umgekehrt, wobei das zu jeder Steuerspeicherstelle gehörende Integritätsbit bei deren Adressierung abgeführt wird. Über die Schreibtorschaltungen wird verhindert, daß in den Steuerspeicher eingeschrieben wird, wenn das Integritätsbit anzeigt, daß es sich um eine geschützte Speicherstelle handelt. Ein Versuch des Überschreibens einer geschützten Speicherstelle wird außerdem einer Wiederholungsschaltung mitgeteilt, die eine vorgegebene Anzahl von Wiederholungen gestattet. Das erzeugte Überschreib-Versuchssignal wird als Auslöser zur Fehlerkorrektur und zum Sicherstellen sowie zur Identifizierung fehlerhafter Instruktionen benützt.

FIG. 3

Croydon Printing Company Ltd.

0011136
BEZEICHNUNG GEÄNDERT
siehe Titelseite

Integritätsschutz für einen Lese-/Schreib-Steuerspeicher

Die Erfindung betrifft eine Schaltungsanordnung nach dem Oberbegriff des Anspruchs 1.

Wie aus den US-Patentschriften Nr. 3 108 257 und 3 599 159 zu ersehen ist, wurden bisher schon verschiedene Verfahren und Anordnungen vorgeschlagen, um die für den Benutzer eines Datenverarbeitungssystems zugänglichen Register oder Speicherstellen zu schützen, die während des Laufes eines Benutzerprogrammes übeschrieben werden können.

Alle herkömmlichen Speicherschutzverfahren oder Anordnungen weisen jedoch gewisse Einschränkungen auf, die ihren Einsatz in bestimmten Anwendungen verbieten. Wenn in einem Datenverarbeitungssystem beispielsweise der Mikrocode in einem Lese-/Schreib-Steuerspeicher untergebracht wird, dann verbleibt dort freier Platz, der wirtschaftlich immer vorteilhaft zur Speicherung von Zwischenergebnissen in Arbeitsregistern benutzt werden kann. Damit wird von der Möglichkeit Gebrauch gemacht, in den Steuerspeicher zu schreiben. Die Bereiche des Steuerspeichers, in denen der Mikrocode steht, müssen jedoch gegen zufälliges Überschreiben beim Einsetzen von Zwischenergebnissen in die freien Bereiche geschützt werden. Herkömmliche Schutzvorrichtungen, wie oben angegeben, erzeugen jedoch eine Programmprüfungsunterbrechung, wenn sie eine versuchte Verletzung einer geschützten Stelle erkennen, d. h., ein laufendes Programm wird abgebrochen in der Annahme, daß ein auf der Programmierung basierender Fehler aufgetreten ist. Durch eine solche Reaktion wird natürlich nicht auf das Problem des zerstörten Steuerspeichers aufmerksam gemacht oder dieses Problem gelöst.

Beim Schutz des Steuerspeichers geht es um die Integrität der Maschinenausrüstung und nicht um einen Fehler im Benutzerprogramm, der falsche Ergebnisse bringen kann. Wenn eine Stel-

EN 977 012

le im Steuerspeicher durch ein unzulässiges Überschreiben verdorben ist, dann ist mindestens ein Teil des Mikrocode sinnlos, da er irgendein Zwischenergebnis aber nicht das richtige Mikrocodewort enthält. Wenn das passiert, zeigt sich der auf den zerstörten Mikrocode zurückzuführende Fehler wahrscheinlich erst lange nach der Adressierung der Stelle im Steuerspeicher, auf der das fehlerhafte Mikrocodewort steht. Die eigentlichen Ursache des falschen Ergebnisses ist also sehr schwer zu identifizieren. Der Benutzer stellt lediglich fest, daß sein Programm beendet wurde. Außerdem bleibt dem Datenverarbeitungssystem selbst die Möglichkeit, andere Benutzerprogramme abzuarbeiten, auch wenn die Maschinenausrüstung oder der Teil, der durch den Mikrocode dargestellt wird, über seinen für die genaue Benutzung zulässigen Zustand hinaus beschädigt oder verändert wurde. Das führt zu einer höheren Systemstillstandszeit und somit zu höheren Wartungskosten.

Die Aufgabe der vorliegenden Erfindung besteht darin, das irrtümliche Überschreiben identifizierter Stellen eines Lese-/ Schreib-Steuerspeichers durch eine leicht und kostengünstig auszuführende Schutzeinrichtung, die auch zum Prüfen vorgeschlagener Mikrocodes verwendet werden kann, zu verhindern und ein Datenverarbeitungssystem mit einer beschädigten Steuerspeicherstelle nach einer vorgegebenen Anzahl von wiederholten Leseversuchen vollständig abzuschalten.

Die Aufgabe der Erfindung wird dadurch gelöst, daß man jeder adressierbaren Steuerspeicherstelle ein Integritätsbit hinzufügt oder ein solches vorsieht. Während der Initialisierung wird das Integritätsbit auf logisch "1" für jede Steuerspeicherstelle gesetzt, die zu schützen ist, und für jede nicht zu schützende Stelle auf logisch "O". Es ist eine Schaltung vorgesehen, mit der das zu jeder Steuerspeicherstelle gehörende Integritätsbit bei deren Adressierung abgefragt wird und andere Schaltungen daran gehindert werden, in den Steuerspeicher nur zu schreiben, wenn das Integritätsbit auf logisch "1" steht. Ein Versuch des Überschreibens einer ge-

EN 977 012

schützten Steuerspeicherstelle wird außerdem der Wiederholungsschaltung mitgeteilt, die eine vorgegebene Anzahl von Wiederholungen gestattet, wenn die Grundlage dafür eine unannehmbare aber vorübergehende Bedingung und/oder die Wirkung einer Unterbrechungsschaltung ist, die das System auf vorgegebene Art abschaltet, nach dem eine Wiederholung beendet wurde.

Weitere Merkmale der Erfindung ergeben sich aus den Kennzeichen der Patentansprüche.

Ein Ausführungsbeispiel der Erfindung ist in den beigefügten Zeichnungen dargestellt und wird anschließend näher beschrieben.

Es zeigen:

Fig. 1     die Breite einer adressierbaren Steuerspeicherstelle in einem typischen Datenverarbeitungssystem,

Fig. 2     die willkürliche Reihenfolge benutzter und adressierbaren Speicherstellen im Steuerspeicher,

Fig. 3     schematisch ein Datenverarbeitungssystem, das einen Lese-/Schreib-Steuerspeicher zusammen mit einem Hauptspeicher verwendet, worin die vorliegende Erfindung genutzt wird und

Fig. 4     schematisch das in Fig. 3 gezeigte System, jedoch sind hier Steuerspeicher und Hauptspeicher getrennt.

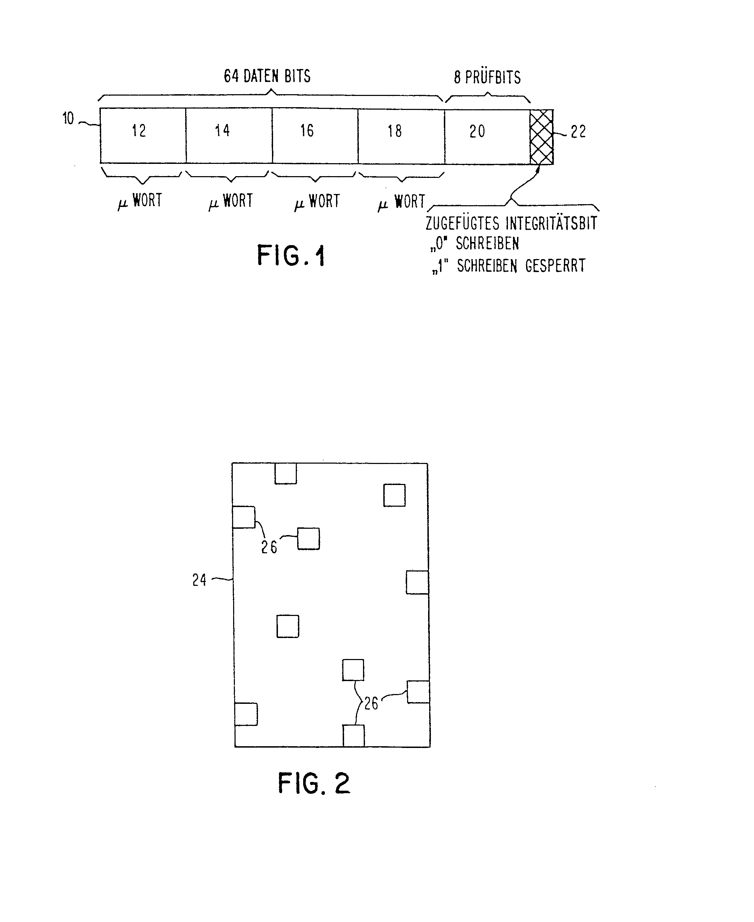

Fig. 1 zeigt die Breite und Anordnung einer Steuerspeicherstelle 10 in einem typischen Datenverarbeitungssystem. Als

EN 977 012

Beispiel wurde die Breite der Datenflußbahn im IBM System
370, Modell 135 gewählt.

In Fig. 1 bilden die wichtigsten oder am weitesten links
stehenden 64 Bits vier Mikrowörter 12, 14, 16 und 18 mit
je 16-Bit-Breite. Außerdem sind acht Fehlerkorrekturbits
20 vorgesehen. Diese 72 Bits bilden ein typisches Doppelwort,
das im System 370, Modell 135 ausgelesen wird. Für die vorliegende Erfindung kommt zu diesen 72 Bits noch ein Integritätsbit 22, das durch seine logische Schaltstellung anzeigt,
daß die, dieses Mikrocodesegment enthaltende Stelle gegen
Überschreiben, gemäß nachfolgender Erklärung, zu schützen
ist.

Fig. 2 zeigt schematisch einen beschreibbaren Steuerspeicher
24, der in einem Datenverarbeitungssystem verwendet werden
kann. In der Praxis wird er bei der Initialisierung mit
einem Steuermikrocode geladen, wobei freie Stellen 26 übrigbleiben, die anderweitig nicht benutzt oder gebraucht werden. Aus Gründen der Wirtschaftlichkeit kann man an diesen
freien Stellen 26 Zwischenergebnisse speichern. Dazu muß
man in den Steuerspeicher 24 schreiben können. Durch einen
Mikroprogrammfehler oder einen Maschinenfehler kann es jedoch vorkommen, daß man an einer anderen, als einer freien
Stelle 26, in den Steuerspeicher 24 schreibt. Die daraus
folgend fälschliche Änderung der Daten im Steuerspeicher wird
erst später sichtbar, wenn die überschriebene Stelle zur
Ausführung der Mikroinstruktionen adressiert wird. Das Problem
wird dadurch weiter erschwert, daß der resultierende Fehler
auf der Programmebene nur ein falsches Ergebnis bringt und
nicht so groß oder von der Art ist, daß er die Aufmerksamkeit
auf die schlechte Speicherstelle richtet. Außerdem ist der resultierende Fehler, wenn er schon identifiziert wird, schwer
zu verfolgen und zu beheben. Daher braucht man ein Speicherschutzschema, das die Integrität eines beschreibbaren Steuerspeichers erhält, wenn diese Art von Steuerspeicher benutzt
werden soll.

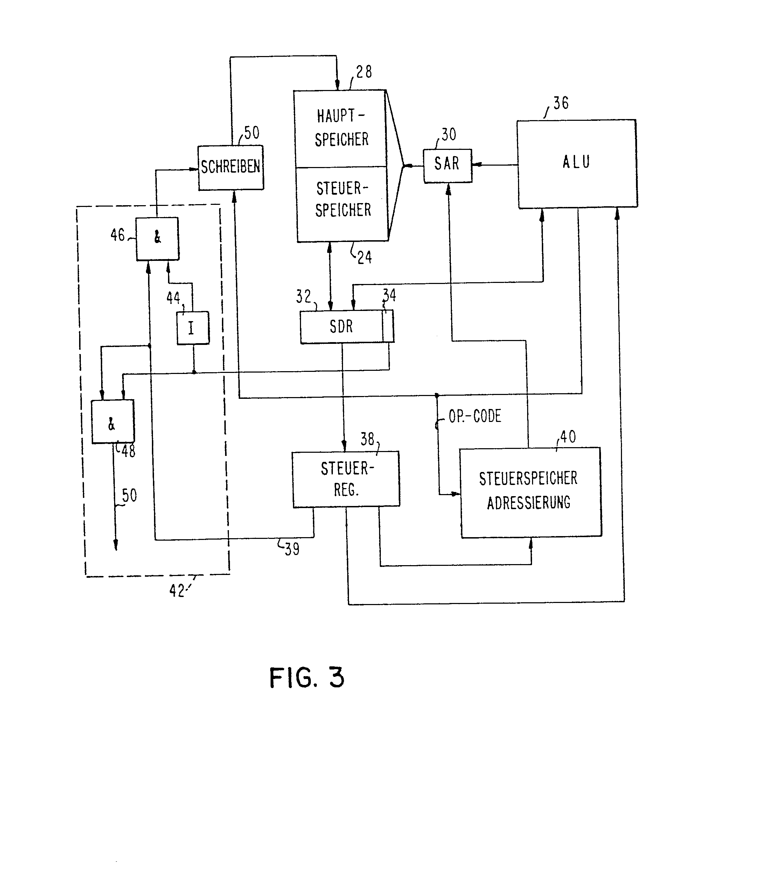

Eine Schaltungsanordnung für ein Datenverarbeitungssystem
mit einem kombinierten Hauptspeicher und Steuerspeicher ist
schematisch in Fig. 3 gezeigt. Der Hauptspeicher 28 und der
Steuerspeicher 24 sind in Wirklichkeit kombiniert ausgeführt,
schematisch aber als zwei separate Elemente entsprechend
ihrer logischen Funktion dargestellt. Bei dem hier betrachteten Speichertyp sind zwei Punkte zu beachten, und zwar
einmal, daß eine bestimmte Speicherstelle nicht destruktiv
gelesen wird und zum anderen, daß beim Schreiben in eine bestimmte Speicherstelle diese vorher gelesen werden muß. Vor
dem Laden eines Mikroprogrammes in den Steuerspeicher 24,
wird dieser auf lauter Nullen gebracht, d.h., jedes Bit einer
jeden adressierbaren Datenstelle wird auf logisch "0" gesetzt.

Beim ersten Laden eines Mikroprogrammes, nachfolgend IMPL
genannt, wird das komplette Mikroprogramm an verschiedene,
nicht unbedingt zusammenhängende, Stellen im Steuerspeicher
gegeben. Der Mikrocode wird typischerweise von einer Platte
oder einem Band zugeführt und ist für den Kunden transparent.
Das Integritätsbit 22 kann jeder Gruppe von adressierbaren
Mikrowörtern über eine zusätzlich externe Schaltung des betrachteten Datenverarbeitungssystems hinzugefügt.werden.
Mit anderen Worten, das Integritätsbit kann dem Mikrocode
zugefügt werden, bevor er auf sein Transportmittel gesetzt
wird. In diesem Fall braucht der Benutzer nur den geschützten
Mikrocode direkt in den Steuerspeicher 24 zu laden.

Das Integritätsbit 22 kann aber auch als Teil des IMP-Prozesses zugefügt werden. Es wurde bereits vorgeschlagen, dieses
Bit gleichzeitig von derselben Schaltung anhängen zu lassen,

EN 977 012

0011136

die den 8-Bit großen Fehlerkorrekturcode 20 anhängt. Das
würde natürlich nur eine leichte Modifikation der Fehlerkorrekturschaltung erfordern. Außerdem wurde vorgeschlagen,
das Integritätsbit 22 an den Mikrocode an jeder zugänglichen
Stelle von im System liegender Hardware, die für diesen Zweck
bestimmt ist, anzuhängen.

Wenn das Mikroprogramm einmal in den Steuerspeicher 24 geladen ist, hat jede Speicherstelle, in der Mikrocode steht,
auch ein Integritätsbit 22, das in diesem Ausführungsbeispiel
auf logisch "1" gesetzt wird. Alle anderen Steuerspeicherstellen stehen auf logisch "0", d.h., auf der Einstellung, auf
die sie vorher bei IMPL gesetzt wurden. Natürlich kann das
Integritätsbit 22 genau so gut auf logisch "0" gesetzt werden, wenn die Initialisierung des Steuerspeichers und die
Abfühlschaltung entsprechend geändert werden.

Wenn hinterher eine geschützte Steuerspeicherstelle durch
Abgabe der gewünschten Adresse an das Speicheradreßregister
30 (SAR) adressiert wird, wird diese Stelle gelesen. Dabei
werden die Daten der adressierten Stelle in das Speicherdatenregister 32 gesetzt, dessen Teil 34 nur zum Festhalten
des Integritätsbits 22 reserviert ist. Der Steuerspeicher
wird adressiert und dann auf übliche Weise unter Steuerung
der Datenverarbeitungsschaltung 36 angesteuert, die die
arithmetische und logische Einheit (ALU), das Steuerregister
38 und die Steuerspeicher-Adreßschaltung 40 enthält. Einzelheiten über die ALU sind der bekannten Literatur zu entnehmen
und werden hier nicht näher erläutert.

Die Daten der angesteuerten Stelle des Steuerspeichers stehen
jetzt im SWR 32 und das Integritätsbit 22, das in der Registerposition 34 gehalten wird, wird abgefühlt und dann an
die Schutzschaltung 42 weitergeleitet. Wenn jetzt in den
Steuerspeicher 24 geschrieben werden soll, wird die Schreib-

0011136

steuerleitung 39 und damit auch eine Eingangsleitung zu jedem der beiden UND-Glieder 46 und 48 auf logisch "1" gesetzt. Wenn das Integritätsbit auf logisch "1" steht und damit geschützt Daten oder den Mikrocode anzeigt, setzt der Inverter 44 den anderen Eingang zum UND-Glied 46 auf logisch "0" und sperrt damit das Schreibtor 50, so daß der Inhalt des SDR 32 nicht in den Steuerspeicher 24 zurückgeschrieben werden kann. Wenn das Integritätsbit auf logisch "1" steht, wird natürlich das UND-Glied 48 eingeschaltet und erzeugt ein logisches Signal, welches anzeigt, daß versucht wurde, in eine geschützte Stelle des Steuerspeichers 24 zu schreiben. Die Verwendung dieses Überschreib-Versuchsignales wird noch näher beschrieben.

Wenn die Datenverarbeitungsschaltung 36 jetzt ein Ergebnis vorübergehend im Steuerspeicher speichern will, wird die Adresse der betreffenden Stelle dem SAR 30 mitgeteilt. Dieses wiederum liest diese Stelle und findet ein auf logisch Null gesetztes Integritätsbit 22 im SBR 32. Das Zwischenergebnis wird jetzt an das SDR 32 weitergeleitet und ein Schreibbefehl gegeben. Da das UND-Glied 46 eingeschaltet ist, ist sein Schreib-Steuereingang ebenso wie sein Eingang vom Inverter 44 logisch hoch und dadurch das Schreibtor 50 eingeschaltet, so daß die im SDR enthaltenen Daten in den Steuerspeicher geschrieben werden. Da das Integritätsbit 22 auf logisch "0" steht, wird dann das UND-Glied 48 abgeschaltet. Wenn also erlaubterweise in den Steuerspeicher 24 geschrieben wird, wird kein Überschreib-Versuchssignal 50 gegeben. Das Datenverarbeitungssystem, in dem die vorliegende Erfindung benutzt wird, kann auf vielerlei Art zur Verarbeitung des Überschreibversuchssignales 50 angepaßt werden. Das System kann so eingestellt werden, daß das Überschreib-Versuchssignal das ganze System auf der Basis abschaltet, daß ein Maschinenfehler aufgetreten ist. Das muß so sein, weil nur aufgrund eines Maschinenfehlers oder eines Mikrocodefehlers versucht wird, in

EN 977 012

- 8 -

eine geschützte Stelle im Steuerspeicher zu schreiben. Außerdem kann das System so geschaltet werden, daß die Erzeugung des Überschreib-Versuchssignales 50 eine Meldung an die Bedienungskraft und/oder eine vorgegebene Zahl von wiederholten Versuchen auslöst. Wenn durch die Erzeugung des Überschreib-Versuchsignales 50 außerdem das Datenverarbeitungssystem abgeschaltet werden soll, kann dieses Signal auch als Auslöser benutzt werden, mit dem die richtigen Programm-Statuswörter gerettet werden. So können die richtigen Zeiger zur Identifizierung einer fehlerhaften Instruktion oder einer Komponente in einem entsprechenden Verzeichnis für das Wartungspersonal gerettet werden.

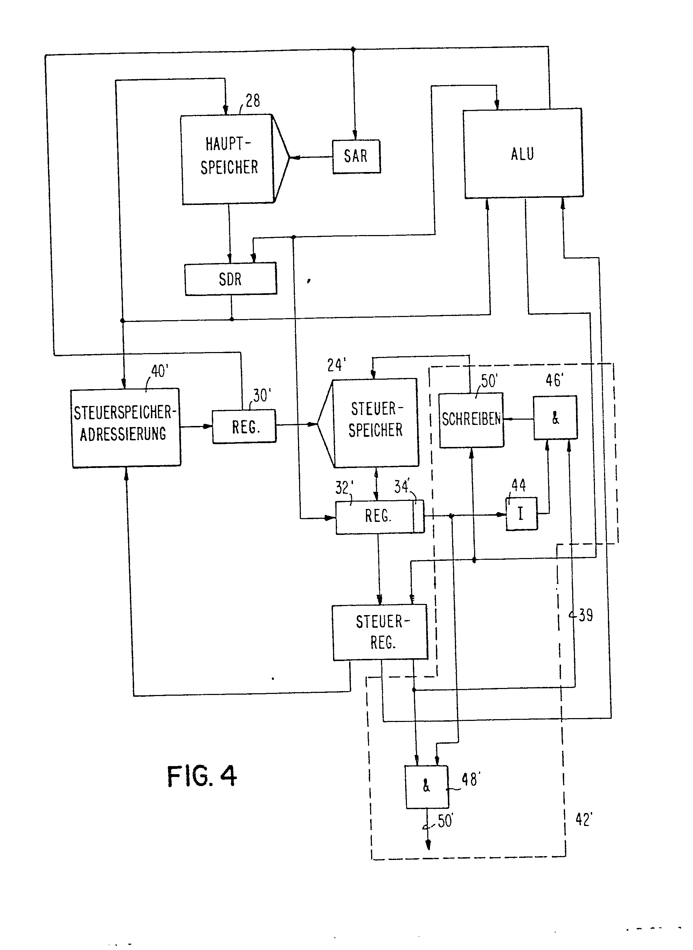

Die in Fig. 4 gezeigte Speicher- und Steuerschaltung unterscheidet sich von der in Fig. 3 gezeigten nur dadurch, daß der Steuerspeicher 24' und der Hauptspeicher 28' physisch sowie logisch voneinander getrennt sind. Das Steuerspeicher-Datenregister 32' entspricht dem SDR 32 der Fig. 3. Mit der in Fig. 4 gezeigten Schaltungsanordnung wird daher ein Überschreib-Versuchssignal 50' unter denselben Bedingungen und aus denselben Gründen erzeugt, wie es für die in Fig. 3 gezeig Schaltung beschrieben wurde.

EN 977 012

0011136

P A T E N T A N S P R Ü C H E

1. Schaltungsanordnung zum Integritätsschutz für einen Lese-/Schreibsteuerspeicher und/oder einen Hauptspeicher eines Datenverarbeitungssystems, wobei der Steuerspeicher außer durch Schutzbits geschützte Mikroprogramm- und Steuerfelder Speicherplätze enthält, die nicht geschützt sind und in die Informationen eingeschrieben bzw. aus denen Informationen mit Hilfe von Speicheradreßregistern, Speicherdatenregistern und Steuerschaltungen des Steuer- und/oder Hauptspeichers ausgelesen werden, dadurch gekennzeichnet,
daß jeder frei adressierbaren Speicherstelle im Steuerspeicher (24) ein Integritätsschutzbit zugeordnet ist, das während einer Initialisierungsphase für jede zu schützende Speicherstelle auf "1" gesetzt wird und für jede nicht zu schützende Stelle auf "0" oder umgekehrt, daß das Speicherdatenregister (34) ebenfalls eine freie Speicherstelle für ein Integritätsschutzbit aufweist, daß diese Stelle des Speicherdatenregisters (32) mit einer ersten UND-Schaltung (48) direkt und mit einer zweiten UND-Schaltung (46) über einen Inverter (44) verbunden ist, daß außerdem mit beiden genannten UND-Schaltungen als zweiter Eingang das Schreib-Steuersignal über eine Leitung (39) vom Steuerregister verbunden ist, das seinerseits mit dem Speicherdatenregister verbunden ist, und daß der Ausgang der UND-Schaltungen (46, 48) mit den Schreibtorschaltungen (50) des Speichers verbunden ist, um das zu jeder Steuerspeicherstelle gehörende Integritätsbit bei deren Adressierung abzufragen und zu verhindern, daß in den Steuerspeicher eingeschrieben wird, wenn das Integritätsbit auf "1" steht.

2. Schaltungsanordnung nach Anspruch 1, dadurch gekennzeichnet,
daß bei einem Versuch des Überschreibens einer geschütz-

EN 977 012

ten Speicherstelle im Steuerspeicher (34) die UND-Schaltung (48) ein Überschreib-Versuchssignal (50') abgibt, das anzeigt, daß ein Maschinenfehler vorliegt, wodurch Fehlerkorrekturoperationen ausgelöst werden.

3. Schaltungsanordnung nach Anspruch 2, dadurch gekennzeichnet, daß das Überschreib-Versuchssignal (50') eine Meldung zur Wiederholung der Schreiboperation oder zur Rettung der Zeiger zur Identifizierung einer fehlerhaften Instruktion im Datenverarbeitungssystem (36) auslöst.

4. Schaltungsanordnung nach den Ansprüchen 1 bis 3, dadurch gekennzeichnet, daß der Hauptspeicher (28) und der Steuerspeicher (24) ein gemeinsames Speicheradreßregister (30), gemeinsame Schreibtorschaltungen (50) und ein gemeinsames Speicherdatenregister (32) mit einer Position (34) zur Speicherung und Abfühlung des Integritätsschutzbits aufweisen.

5. Schaltungsanordnung nach den Ansprüchen 1 bis 3, dadurch gekennzeichnet, daß der Steuerspeicher (24') getrennt vom Hauptspeicher (28') angeordnet ist und eigene Integritätsschutzbitspeicher-, Abfühl- und Verknüpfungsschaltungen (34', 44', 46', 48', 50'), besitzt.

EN 977 012

**64 DATEN BITS**  **8 PRÜFBITS**

| 12 | 14 | 16 | 18 | 20 | 22 |

10

μ WORT   μ WORT   μ WORT   μ WORT

ZUGEFÜGTES INTEGRITÄTSBIT
„0" SCHREIBEN
„1" SCHREIBEN GESPERRT

**FIG.1**

24

26

26

**FIG. 2**

2 / 3

0011136

FIG. 3

FIG. 4

Europäisches Patentamt

**EUROPÄISCHER RECHERCHENBERICHT**

Nummer der Anmeldung 0011136

EP 79103922.5

| | EINSCHLÄGIGE DOKUMENTE | | KLASSIFIKATION DER ANMELDUNG (Int.Cl.³) 3 |
|---|---|---|---|
| Kategorie | Kennzeichnung des Dokuments mit Angabe, soweit erforderlich, der maßgeblichen Teile | betrifft Anspruch | |
| A | <u>DE - A1 - 2 749 710</u> (IBM)<br><br>÷ Seite 1, Patentanspruch 1; Seite 6, Zeile 18 - Seite 9, Zeile 1; Figur 1; Seite 10, Zeile 23 - Seite 11, Zeile 18; Figur 2 +<br><br>-- | 1,2,5 | G 06 F 13/00<br>G 11 C 7/00 |
| A | <u>DE - A1 - 2 639 557</u> (CII)<br><br>÷ Seite 1, Zeile 14 - Seite 2, Zeile 4 +<br><br>-- | 1 | |
| X | <u>DE - A - 1 774 863</u> (BURROUGHS)<br><br>+ Seite 1, Zeile 5 - Seite 3, Zeile 27; Seiten 13,14, Patentansprüche 1-4; Zeichnung +<br><br>-- | 1-3 | RECHERCHIERTE SACHGEBIETE (Int. Cl.³) 3<br><br>G 06 F<br>G 11 C |
| X | <u>DD - A - 98 383</u> (SCHULZE)<br><br>+ Seiten 12-14, Patentansprüche 1,2; Figuren 1,2 +<br><br>-- | 1,2 | |
| D | <u>US - A - 3 599 159</u> (BURROUGHS)<br><br>-- | | |
| D | <u>US - A - 3 108 257</u> (IBM)<br><br>---- | | |

| | KATEGORIE DER GENANNTEN DOKUMENTE |
|---|---|
| | X: von besonderer Bedeutung |
| | A: technologischer Hintergrund |
| | O: nichtschriftliche Offenbarung |
| | P: Zwischenliteratur |
| | T: der Erfindung zugrunde liegende Theorien oder Grundsätze |
| | E: kollidierende Anmeldung |
| | D: in der Anmeldung angeführtes Dokument |
| | L: aus andern Gründen angeführtes Dokument |
| | &: Mitglied der gleichen Patentfamilie, übereinstimmendes Dokument |

| X | Der vorliegende Recherchenbericht wurde für alle Patentansprüche erstellt. |

| Recherchenort | Abschlußdatum der Recherche | Prüfer |
|---|---|---|
| WIEN | 14-02-1980 | NEGWER |

EPA form 1503.1   06.78